# EUROPÄISCHE PATENTSCHRIFT

(11) **EP 1 753 702 B1**
(45) Veröffentlichungstag und Bekanntmachung des Hinweises auf die Patenterteilung: **02.12.2009**
(21) Anmeldenummer: 05737930.7
(22) Anmeldetag: 27.04.2005
(51) Int. Cl.: C03C 17/06, C03C 21/00

(54) **VERFAHREN ZUR OBERFLÄCHENBEHANDLUNG VON GLÄSERN MIT METALLISCHEN ALUMINIUM**
METHOD FOR TREATING THE SURFACE OF GLASSES WITH METALLIC ALUMINIUM
PROCEDE POUR TRAITER LA SURFACE DE VERRES AU MOYEN D'ALUMINIUM METALLIQUE

(30) Priorität: 07.05.2004 DE 102004023779
(43) Veröffentlichungstag der Anmeldung: 21.02.2007
(73) Patentinhaber: Sklostroj Turnov CZ, S.R.O., 511 01 Turnov (CZ)
(72) Erfinder: Hessenkemper, Heiko, 09603 Grossschirma (DE)
(74) Vertreter: Andera, Jiri
(86) Internationale Anmeldenummer: PCT/EP2005/051903
(87) Internationale Veröffentlichungsnummer: WO 2005/110936

(56) Entgegenhaltungen:
- WO-A-2004/096724
- BE-A- 712 927
- DE-A1- 1 913 497
- FR-A- 1 584 741
- PATENT ABSTRACTS OF JAPAN Bd. 1999, Nr. 13, 30. November 1999 (1999-11-30) & JP 11 228172 A (KOBE STEEL LTD), 24. August 1999 (1999-08-24)

## Beschreibung

Die Erfindung betrifft ein Verfahren zur Oberflächenbehandlung von Gläsern, deren zumindest oberflächennahe Zusammensetzung einen höheren molaren Anteil an Alkalimetallen als an Aluminium aufweist.

Verfahren zur Behandlung von Glasoberflächen sind in vielfältiger Ausgestaltung bekannt und lassen sich vereinfacht in additive und subtraktive Verfahren gliedern. Unter additiven Verfahren werden üblicherweise Oberflächenbehandlungsverfahren, wie Vakuumbeschichtung durch Aufdampfen oder Kathodenzerstäubung, Beschichtung durch Gasphasenreaktion mittels CVD oder Sprühverfahren, sowie Beschichtung durch flüssige Medien mittels Tauchverfahren oder stromlose Metallisierung verstanden. Als subtraktive Verfahren sind bekannt Ionenaustausch durch Reaktion mit wässrigen Lösungen, Salzschmelzen oder aggressiven Gasen, Elektrotransport mittels Salzschmelzen oder Metallschmelzen sowie Ionenimplantation. Es hat sich gezeigt, dass die veredelnde Behandlung von Glasoberflächen ein wirkungsvoller Ansatz zur Beeinflussung der mechanischen, elektrischen, optischen und chemischen Eigenschaften des Glases ist. Trotz der bestehenden Vielfalt an Behandlungsverfahren ist der Bedarf an Alternativen nach wie vor groß, vor allem, wenn diese Verfahren im großindustriellen Maßstab Anwendung finden sollen. Besonders bedeutsam sind dabei Behandlungsverfahren, die zu einer Verbesserung von Glaseigenschaften, wie Mikrohärte, chemischer Beständigkeit sowie Leitfähigkeit führen, da diese Eigenschaften im Alltag häufig den Gebrauchswert maßgeblich mitbestimmen.

In DE 19 13 497 A1 ist ein Verfahren zur Oberflächenbehandlung von Gläsern offenbart, wobei das Glas in ein pastenartiges Medium eingetaucht wird, das aus Aluminiumpulver und geschmolzenem Lithiumchlorid besteht.

Die Aufgabe der vorliegenden Erfindung ist es, ein weiteres Verfahren zur Oberflächenbehandlung von Gläsern, deren zumindest oberflächennahe Zusammensetzung einen höheren molaren Anteil an Alkalimetallen als an Aluminium aufweist, bereitzustellen. Die mit der Behandlung eintretenden Veränderungen im Bereich der Glasoberfläche sollen insbesondere die Härte der Glases erhöhen, seine elektrische Leitfähigkeit verringern und dessen chemische Beständigkeit, insbesondere hydrolytische Beständigkeit, verbessern.

Diese Aufgabe wird durch das erfindungsgemäße Verfahren gemäß Anspruch 1 gelöst.

,Metallisches Aluminium' im Sinne der Erfindung ist entweder Rein-Aluminium oder eine Aluminiumlegierung. Aluminium und seine Legierungen besitzen eine wenige nm dicke Schutzschicht aus einer harten, zusammenhängenden und durchsichtigen Oxid-Schicht, die sich z.B. auf frisch angeritztem Aluminium an der Luft und im Wasser schon in wenigen Sekunden bildet. Diese Schutzschicht ist für das erfindungsgemäße Verfahren in der Regel nicht störend, sondern führt nur zu einer Verlangsamung der im Glas während der Behandlung ablaufenden Prozesse.

Die Legierungen des Aluminiums enthalten meist nur geringe Anteile anderer Metalle neben der Hauptkomponente. Die wichtigsten Legierungszusätze sind Kupfer, Magnesium, Silizium, Mangan, Zink; in kleineren Mengen werden Nickel, Cobalt, Chrom, Vanadium, Titan, Blei, Zinn, Cadmium, Bismut, Zirkonium und Silber als Komponenten verwendet. Bor und Beryllium treten als Spurenkomponenten auf. Die Löslichkeit der einzelnen Legierungs-Komponenten im Aluminium ist sehr unterschiedlich; bei höheren Konzentrationen können sie elementar (z. B. Silizium) oder als intermetallische Verbindungen mit Aluminium (Aluminide wie z. B. Al₆Mn, CuAl₂) im Gefüge auftreten. Auch Verbindungen zwischen oder mit mehreren Zusatzkomponenten können in Aluminiumlegierungen vorkommen (z. B. Mg₂Si, Al₁₂Fe₃Si). Gegenüber Rein-Aluminium weisen die Legierungen meist wesentlich größere Festigkeit und Korrosionsbeständigkeit, bessere Verarbeitbarkeit und geringere elektrische Leitfähigkeit auf.

Anzumerken ist ferner, dass bei der Behandlung von silicathaltigen Gläsern mit metallischem Aluminium unter den erfindungsgemäßen Verfahrensbedingungen zumindest theoretisch elementares Silizium durch Reduktion entstehen könnte. Aufgrund der lediglich oberflächennahen Behandlung ist der kumulative Eintrag an Aluminium pro Flächeneinheit behandelter Glasoberfläche aber gering und damit dürfte die mögliche Bildung elementaren Siliziums nur geringfügigen Einfluss auf die Eigenschaften des Glases haben. Zudem wird die erfindungsgemäße Oberflächenbehandlung in sauerstoffhaltiger Atmosphäre und unter Bedingungen durchgeführt, die zur Oxidation des möglicherweise zwischenzeitlich entstandenen Siliziums führen dürften.

Unter 'Glas' im erfindungsgemäßen Sinne wird zum einen ein anorganisches oxidisches Schmelzprodukt auf Silikatbasis verstanden, das durch einen Einfriervorgang ohne Auskristallisation der Schmelzphasenkomponenten in den festen Zustand überführt wird. Derartigen technischen Gläsern werden in der Regel weitere Oxide, wie Kalziumoxid (CaO), Natriumoxid (Na₂O), Bortrioxid (B₂O₃), Aluminiumoxid (Al₂O₃), Bleioxid (PbO), Magnesiumoxid (MgO), Bariumoxid (BaO) und Kaliumoxid (K₂O) zugesetzt. Der Begriff Glas umfasst auch Glasuren, die beispielsweise als Überzug auf Porzellan oder anderen keramischen Werkstoffen Anwendung finden.

Unter 'Glas' im erfindungsgemäßen Sinne werden zum anderen silicatfreie oxidische Schmelzprodukte auf Basis von Glasbildner wie Diphoshorpentoxid oder Bortrioxid verstanden. Hierzu gehören beispielsweise Natrium-Phosphat-Gläser mit dem Na:P-Verhältnis 1 (Grahamsches Salz). Derartige Gläser zeichnen sich durch eine hohe UV-Durchlässigkeit und hohe mittlere Dispersion aus, sind aber wenig beständig gegen Chemikalien.

Zur Behandlung geeignete Gläser müssen zumindest oberflächennah einen höheren molaren Anteil an Alkalimetallen als an Aluminium aufweisen. Mit anderen Worten, nur in dem oberflächennahen Bereich und eben nicht im gesamten Volumen des Glaskörpers muss ein stöchiometrischer Überschuss an Alkalimetallen gegenüber Aluminium bestehen. Unter "oberflächennah' im erfindungsgemäßen Sinne, wird ein Bereich verstanden, der sich ausgehend von der Glasoberfläche bis mindestens in eine Tiefe von 1 µm erstreckt. Dieser Bereich des Glases kann ggf. erst durch vorgeschaltete Behandlungsverfahren in der gewünschten Weise modifiziert werden.

Nach einer bevorzugten Ausgestaltung des Verfahrens wird der Behandlungsschritt des In-Kontakt-Bringens der Glasoberfläche mit Aluminium solange aufrecht erhalten, bis sich in einer Oberflächenschicht, die sich ausgehend von der Glasoberfläche bis in eine Tiefe von mindestens 20, aber höchstens 1000 nm - insbesondere mindestens 50, aber höchstens 300 nm - erstreckt, ein vorgegebenes molares Verhältnis von Aluminium zu Alkalimetall eingestellt hat. Gläser mit veredelten Oberflächenschichten im vorgenannten Sinne zeigen in der Regel verbesserte Glaseigenschaften, wie eine erhöhte Mikrohärte, geringere Leitfähigkeit und höhere hydrolytische Beständigkeit, ohne dass dies zu einer merklichen Veränderung der sonstigen, durch das Volumen des Glases bestimmten Eigenschaften führt.

Ferner liegt ein molares Verhältnis von Aluminium zu Alkalimetall in der Oberflächenschicht nach dem Behandlungsschritt des In-Kontakt-Bringens vorzugsweise im Bereich von 0,6:1 bis 1:0,6, insbesondere 0,9:1 bis 1:0,9. Den genannten Vorzugsbereichen für die molaren Verhältnisse liegt die Erkenntnis zugrunde, dass vermutlich thermodynamische besonders stabile Albitphasen, albitähnliche Phasen oder Mullitphasen während der Behandlung in der Oberflächenschicht gebildet werden, die - im Idealfall - eine 1:1 Stöchiometrie einnehmen sollten. Anzumerken bleibt, dass sich die genannten molaren Verhältnisse nicht zwingend homogen über die gesamte Tiefe der Oberflächenschicht einstellen müssen. So werden beispielsweise auch graduelle Verteilungen der beiden Komponenten Aluminium und Alkalimetall über die Oberflächenschicht mit umfasst, deren über die gesamte Tiefe der Oberflächenschicht gemitteltes molares Verhältnis in den vorgenannten Vorzugsbereichen liegt.

Weiterhin ist bevorzugt, dass eine Kontaktdauer des Aluminiums im Behandlungsschritt des In-Kontakt-Bringens im Bereich von 0,5 Sekunden bis 15 Minuten, insbesondere 1 Sekunden bis 1 Minute, liegt. Bei kürzeren Kontaktdauern ist eine gleichmäßige Oberflächenbehandlung der Gläser nicht mehr sichergestellt, wohingegen längere Behandlungsdauern das Risiko des Auftretens unerwünschter Änderungen im Volumen des Glases erhöhen und zudem verfahrenstechnisch für industrielle Prozesse unattraktiv werden.

Während des Behandlungsschritts des In-Kontakt-Bringens der Glasoberfläche mit Aluminium liegt die Temperatur vorzugsweise bei ± 250°C der Transformationstemperatur des Glases, besonderes bevorzugt jedoch bei 500°C bis 700 °C oberhalb der Transformationstemperatur. Es hat sich gezeigt, dass bei einer Verfahrensführung in diesen Temperaturbereichen eine besonders gleichmäßige Oberflächenbehandlung des Glases gewährleistet wird.

Die mit der Behandlung eintretenden Änderungen an der Oberfläche verleihen dem Glas neue, bisher unbekannte oder zumindest verbesserte Eigenschaften, wie eine verbesserte hydrolytische Beständigkeit, eine erhöhte Mikrohärte als auch eine erniedrigte elektrische Leitfähigkeit.

Ein weiterer Aspekt der Erfindung bezieht sich auf die Verwendung des oben genannten erfindungsgemäßen Verfahrens im Zusammenhang mit einer Außenvergütung von Behälterglas. Die Außenvergütung kann derart durchgeführt werden, dass das Formwerkzeug zur Ausformung eines Behälterglases ganz oder in Teilen aus Aluminium oder seinen Legierungen besteht.

Die Erfindung wird nachfolgend anhand von Ausführungsbeispielen und den dazugehörigen Zeichnungen näher erläutert. Es zeigen:
- Fig. 1: Die Verläufe der Mikrohärte in behandelten und unbehandelten Kieselglas- platten, und
- Fig. 2, 3: Die Verläufe einer Mikrosondenanalyse zur Bestimmung relativer Element- intensitäten an einer Bruchoberfläche von Probengläsern.

### Ausführunasbeispiel 1

Kommerzielles Floatglas (Zusammensetzung in Gew.%: 71% SiO₂, 13 % Na₂O, 11 % CaO, 2 % MgO, 1,5 % Al₂O₃, 0,5 % K₂O der Maße 3 mal 2 cm wurde bei Raumtemperatur zwischen zwei Aluminiumplatten gelegt und mit 10 K/min bis zur Zieltemperatur aufgeheizt, 15 min bei der Zieltemperatur gehalten und dann durch Ausschalten des Muffelofens abgekühlt. Die Al-Legierung bestand aus: 93,4 % Al, 3,9% Cu, 1,1% Pb, 0,6 % Mg, 0,6% Mn, 0,22 % Fe, 0,15 % Si, jeweils in Gew.%. Danach wurden die Proben in 20 ml destilliertem Wasser bei 90°C 48 Stunden gelagert. Die sich dann ergebenen Leitfähigkeitswerte in µS waren wie folgt:
o Unbehandelte Probe: 10
o Bei 700°C (nominal) behandelte Probe: 7,5
o Bei 850 °C (nominal) behandelte Probe: 4,5

Auf Grund der thermischen Trägheit des Systems dürften die realen Temperaturen niedriger gelegen haben.

### Ausführunasbeispiel 2

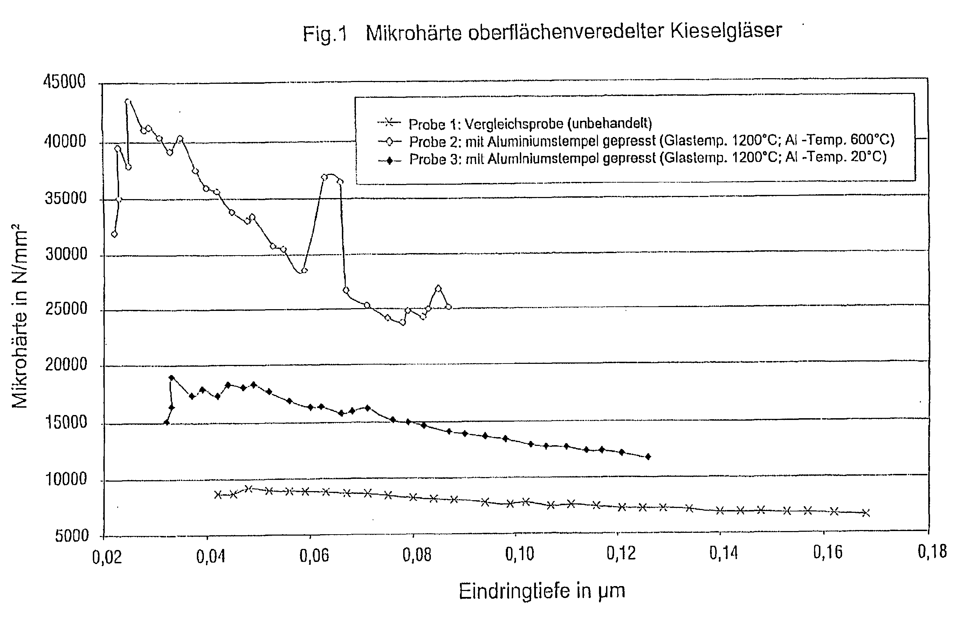

Kieselglasplatten der Abmaße 35 mal 38 mal 2 mm wurden mit 10 K/min in einem Muffelofen auf 1200°C aufgeheizt und dann zwischen unterschiedlich vorgeheizte Aluminiumplatten mit der im Ausführungsbeispiel 1 beschriebenen Zusammensetzung für 30 sec außerhalb der Muffelofens in Kontakt gebracht. Die Ergebnisse der Mikrohärte-Untersuchungen nach Vickers sind als Funktion der Eindringtiefe im Fig. 1 dargestellt. Die Probe 1 zeigt den Verlauf der Mikrohärte im unbehandelten Glas. Der Aluminiumstempel der Probe 2 wurde vor der Behandlung auf 600°C aufgeheizt, während die Temperatur des Stempels in Probe 3 20°C betrug. Es ist eine signifikante Erhöhung der Mikrohärte durch die Veredelung erkennbar. Besonders ausgeprägt ist die Erhöhung der Mikrohärte bis in eine Eindringtiefe von etwa 0,1 µm bei Stempeltemperaturen um 600 °C.

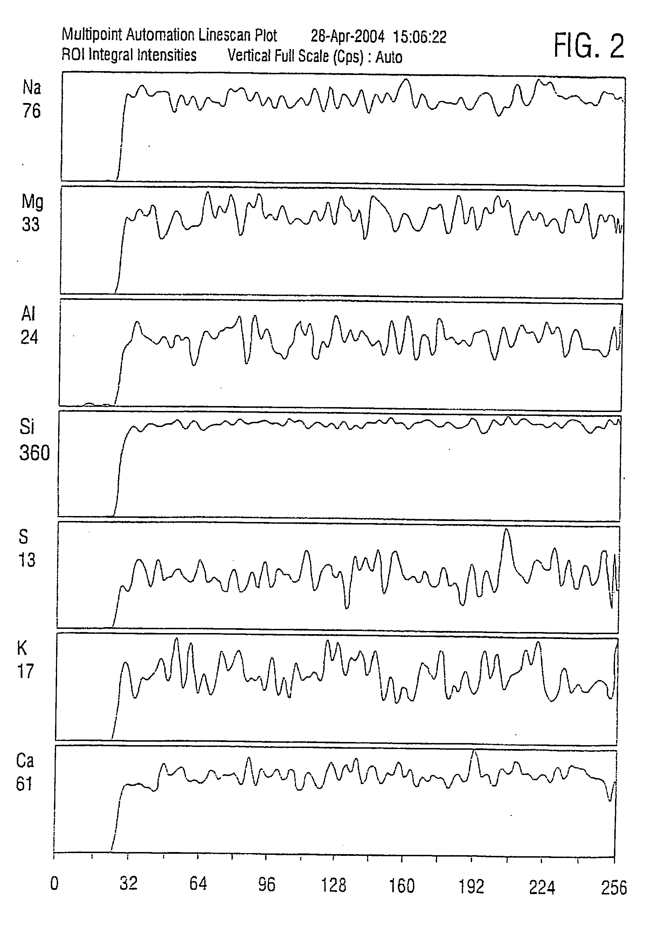

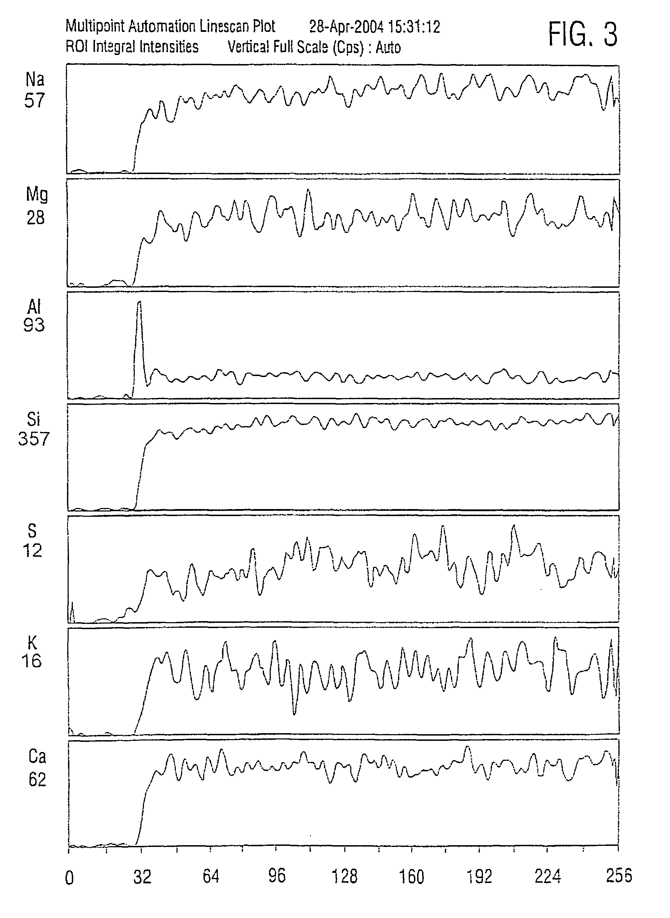

Fig. 2 zeigt eine unbehandelte Floatglasprobe. Fig. 3 eine bei ca. 600°C wärmebehandelte Probe mit einem Aluminiumstempel der Zusammensetzung 95 % Al, 3 % Mg und 1 % Si sowie Spurenelementen.

## Patentansprüche

1. Verfahren zur Oberflächenbehandlung von Gläsern, deren zumindest oberflächennahe Zusammensetzung einen höheren molaren Anteil an Alkalimetallen als an Aluminium aufweist, umfassend folgenden Behandlungsschritt:
In-Kontakt-Bringen der Glasoberfläche mit metallischem Aluminium, wobei eine Temperatur während des In-Kontakt-Bringens zwischen 250°C unterhalb bis 800°C oberhalb der Transformationstemperatur des Glases im Bereich der zu behandelnden Oberfläche liegt und das Aluminium als Formwerkzeug oder Teil eines Formwerkzeuges vorliegt.

2. Verfahren nach Anspruch 1, **dadurch gekennzeichnet, dass** das Formwerkzeug oder der Teil des Formwerkzeugs aus Aluminium während des Schritts des In-Kontakt-Bringens gekühlt wird.

3. Verfahren nach Anspruch 1 oder 2, **dadurch gekennzeichnet, dass** der Behandlungsschritt des In-Kontakt-Bringens der Glasoberfläche mit Aluminium solange aufrechterhalten wird, bis sich in einer Oberflächenschicht, die sich ausgehend von der Glasoberfläche bis in eine Schichttiefe von mindestens 20, aber höchstens 1000 nm erstreckt, ein vorgegebenes molares Verhältnis von Aluminium zu Alkalimetall eingestellt hat.

4. Verfahren nach Anspruch 1 oder 2, **dadurch gekennzeichnet, dass** das molare Verhältnis von Aluminium zu Alkalimetall in der Oberflächenschicht nach dem Behandlungsschritt des In-Kontakt-Bringens im Bereich von 0,6:1 bis 1:0,6 liegt.

5. Verfahren nach Anspruch 1 oder 2, **dadurch gekennzeichnet, dass** der Gewichtsprozentanteil des Aluminiums in der Oberflächenschicht nach dem Behandlungsschritt des In-Kontakt-Bringens im Bereich von 1 bis 20 Gew.% liegt.

6. Verfahren nach Anspruch 1 oder 2, **dadurch gekennzeichnet, dass** eine Kontaktdauer von Aluminium im Behandlungsschritt des In-Kontakt-Bringens im Bereich von 0,5 s bis 15 min, insbesondere 1 s bis 1 min, liegt.

## Claims

1. A method of surface treatment of glasses whose composition at least near the surface has a higher molar proportion of alkali metals than aluminium, comprising the following treatment step:
bringing the glass surface into contact with metallic aluminium, wherein a temperature during the contacting step is between 250°C below and 800°C above the transformation temperature of the glass in the region of the surface to be treated and the aluminium is in the form of a shaping tool or part of a shaping tool.

2. A method according to claim 1 **characterised in that** the shaping tool or the part of the shaping tool of aluminium is cooled during the contacting step.

3. A method according to claim 1 or claim 2 **characterised in that** the treatment step of bringing the glass surface into contact with aluminium is maintained until a predetermined molar ratio of aluminium to alkali metal has occurred in a surface layer which extends from the glass surface into a layer depth of at least 20 but at most 1000 nm.

4. A method according to claim 1 or claim 2 **characterised in that** the molar ratio of aluminium to alkali metal in the surface layer after the contacting treatment step is in the region of 0.6:1 to 1:0.6.

5. A method according to claim 1 or claim 2 **characterised in that** the percentage by weight of the aluminium in the surface layer after the contacting treatment step is in the region of 1 to 20 % by weight.

6. A method according to claim 1 or claim 2 **characterised in that** a contact time of aluminium in the contacting treatment step is in the region of 0.5 s to 15 min, in particular 1 s to 1 min.

## Revendications

1. Une méthode de traitement de surface pour verres dont la composition a une proportion molaire de métaux alcalins plus importante que l'aluminium, au moins à la proximité de la surface, méthode comprenant la mesure de traitement suivante :
Mise en contact de la surface du verre avec de l'aluminium métallique alors que la température pendant le contact est entre 250°C au dessous et 800°C au dessus de la température de transformation du verre de la zone de la surface à traiter et où l'aluminium est ou fait partie d'un outil de formage.

2. La méthode selon la revendication 1, **caractérisée par le fait que** l'outil de formage ou une partie de l'outil de formage en aluminium est refroidi pendant la mise en contact.

3. La méthode selon les revendications 1 ou 2, **caractérisée par le fait que** le contact lors de l'étape de traitement de la surface du verre avec de l'aluminium est maintenu jusqu'à ce qu'une relation molaire définie de l'aluminium aux métaux alcalins ne soit atteinte dans une épaisseur de couche d'au moins 20 mm (mais maximum 1000 mm) sur la surface du verre.

4. La méthode selon les revendications 1 ou 2, **caractérisée par le fait que** la relation molaire de l'aluminium aux métaux alcalins dans la couche de surface après le traitement par contact est entre 0,6 : 1 et 1 : 0,6.

5. La méthode selon les revendications 1 ou 2, **caractérisée par le fait que** la masse relative exprimée en pourcent d'aluminium dans la masse totale de la couche de surface est entre 1 et 20% après le traitement par mise en contact.

6. La méthode selon les revendications 1 ou 2, **caractérisée par le fait que** la durée du contact de l'aluminium lors de l'étape de traitement est entre 0,5 s et 15 min, habituellement entre 1 s et 1 min.
